# EUROPEAN PATENT APPLICATION

(11) **EP 4 753 131 A1**
(43) Date of publication of application: **03.06.2026**
(21) Application number: 24852032.2
(22) Date of filing: 14.06.2024
(51) Int. Cl.: H02M 3/00, H02M 1/00, H02M 3/158, B60L 53/22, H02J 7/02

(54) **RESONANT CONVERTER AND ELECTRIC VEHICLE CHARGER COMPRISING SAME**

(30) Priority: 04.08.2023 KR 20230102233
(71) Applicant: SOLUM CO., LTD., Gyeonggi-do 16914 (KR)
(72) Inventor: JI, Sang Keun, Yongin-si, Gyeonggi-do 16953 (KR); RYU, Dong Kyun, Seoul 05555 (KR)
(74) Representative: Patel, Nikesh
(86) International application number: PCT/KR2024/008220
(87) International publication number: WO 2025/033675

(57) **Abstract**

A resonant converter and an electric vehicle charger including the same are provided. The resonant converter includes a first input circuit including a first primary winding, a second input circuit including a second primary winding, a first switch configured to electrically connect the first primary winding and the second primary winding, a first output circuit including a first secondary winding and a first commutation network, a second output circuit including a second secondary winding and a second commutation network, a second switch configured to electrically connect the first secondary winding and the second secondary winding, and an output capacitor connected in parallel with the first output circuit and the second output circuit.

## Description

### [Technical Field]

The present disclosure relates to a resonant converter and an electric vehicle including the same.

### [Background Art]

Electric vehicles (EVs) are vehicles that use electric energy as their power source, and emit significantly less carbon compared to conventional internal combustion engines, making them a crucial application for addressing issues such as environmental pollution and climate change. However, many challenges remain for the widespread adoption of EVs, the most pressing of which is securing charging infrastructure.

Conventional electric vehicles are equipped with 400 V batteries and operate with a voltage range of approximately 150 V to 500 V. However, the use of 800 V batteries is increasing recently to meet the demands of high-capacity charging and to reduce the weight of internal vehicle structures (e.g., bus bars). 800 V batteries operate with a voltage range of approximately 300 V to 1,000 V. Consequently, a power conversion circuit for EV charging capable of providing high-efficiency charging power across a wide voltage range of approximately 150 V to 1,000 V is required.

### [Disclosure]

### [Technical Problem]

Various embodiments provide a resonant converter with a wide range of output voltages and an electric vehicle charger including the same. The technical objects to be achieved by the present disclosure are not limited to the technical objects described above, and other technical objects can be inferred from the following embodiments.

### [Technical Solution]

To achieve the aforementioned technical object, a resonant converter for an electric vehicle charger according to an aspect includes a first input circuit including a first switching bridge, a first resonant tank, and a first primary winding, a second input circuit connected in parallel with the first input circuit and including a second switching bridge, a second resonant tank, and a second primary winding, a first switch configured to electrically connect the first primary winding and the second primary winding in series, a first output circuit including a first secondary winding constituting a first transformer along with the first primary winding, and a first commutation network, a second output circuit connected in parallel with the first output circuit and including a second secondary winding constituting a second transformer along with the second primary winding, and a second commutation network, a second switch configured to electrically connect the first secondary winding and the second secondary winding in series, and an output capacitor connected in parallel with the first output circuit and the second output circuit.

A resonant converter for an electric vehicle charger according to another aspect includes a first input circuit including a first switching bridge, a first resonant tank, and a first primary winding, a second input circuit connected in parallel with the first input circuit and including a second switching bridge, a second resonant tank, and a second primary winding, a switch configured to electrically connect the first primary winding and the second primary winding in series, a first output circuit including a first secondary winding constituting a first transformer along with the first primary winding, and a first rectifier network, a second output circuit connected in parallel with the first output circuit, and including a second secondary winding constituting a second transformer along with the second primary winding, and a second rectifier network, and an output capacitor connected in parallel with the first output circuit and the second output circuit.

An electric vehicle charger according to another aspect includes an AC-DC converter configured to convert AC power received from an external power source into DC power, an electric reservoir configured to store the DC power received from the AC-DC converter, a DC-DC converter configured to convert the DC power received from the AC-DC converter or the electric reservoir into DC power having a different voltage, and a controller configured to control the AC-DC converter, the electric reservoir, and the DC-DC converter, wherein the DC-DC converter includes a first input circuit including a first switching bridge, a first resonant tank, and a first primary winding, a second input circuit connected in parallel with the first input circuit and including a second switching bridge, a second resonant tank, and a second primary winding, a first switch configured to electrically connect the first primary winding and the second primary winding in series, a first output circuit including a first secondary winding constituting a first transformer along with the first primary winding, and a first rectifier network, a second output circuit connected in parallel with the first output circuit and including a second secondary winding constituting a second transformer along with the second primary winding, and a second rectifier network, a second switch configured to connect the first secondary winding and the second secondary winding, and an output capacitor connected in parallel with the first output circuit and the second output circuit.

### [Advantageous Effects]

The resonant converter and the electric vehicle charger including the same according to various embodiments of the present disclosure can provide a wide range of output voltages.

Furthermore, the resonant converter and the electric vehicle charger including the same according to various embodiments of the present disclosure can provide a wide range of output voltages depending on open/closed states of the first and second switches by disposing the first switch between the primary windings of the input circuits and disposing the second switch between the secondary windings of the output circuits.

Furthermore, the resonant converter and the electric vehicle charger including the same according to various embodiments of the present disclosure can provide a wide range of output voltages depending on open/closed states of a switch by disposing the switch between the primary windings of the input circuits.

The effects of the embodiments are not limited to the above-described effects, and other effects not mentioned will be clearly understood by those skilled in the art from the present disclosure and the accompanying drawings.

### [Description of Drawings]

FIG. 1 to FIG. 6 are circuit diagrams illustrating resonant converters according to embodiments.
FIG. 7 is a block diagram of an electric vehicle charger according to an embodiment.

### [Best Mode]

A resonant converter for an electric vehicle charger according to an embodiment may include a first input circuit including a first switching bridge, a first resonant tank, and a first primary winding, a second input circuit connected in parallel with the first input circuit and including a second switching bridge, a second resonant tank, and a second primary winding, a first switch configured to electrically connect the first primary winding and the second primary winding in series, a first output circuit including a first secondary winding constituting first transformer along with the first primary winding, and a first commutation network, a second output circuit connected in parallel with the first output circuit and including a second secondary winding constituting a second transformer along with the second primary winding, and a second commutation network, a second switch configured to electrically connect the first secondary winding and the second secondary winding in series, and an output capacitor connected in parallel with the first output circuit and the second output circuit.

When the first switch is open and the second switch is open, a first voltage may be applied to the output capacitor based on an output voltage of the first output circuit and an output voltage of the second output circuit, and when the first switch is closed and the second switch is open, a second voltage may be applied to the output capacitor based on the output voltage of the first output circuit and the output voltage of the second output circuit, wherein the magnitude of the second voltage may be less than the magnitude of the first voltage.

When the first switch is open and the second switch is closed, a third voltage may be applied to the output capacitor based on a voltage of the first secondary winding and a voltage of the second secondary winding, wherein the magnitude of the third voltage may be greater than the magnitude of the first voltage.

When the first switch is closed and the second switch is closed, a fourth voltage may be applied to the output capacitor based on the voltage of the first secondary winding and the voltage of the second secondary winding, wherein the magnitude of the fourth voltage may be greater than the magnitude of the second voltage and less than the magnitude of the third voltage.

The first input circuit may be a first H-bridge circuit in which the first resonant tank and the first primary winding are disposed along the centerline, and the second input circuit may be a second H-bridge circuit in which the second resonant tank and the second primary winding are disposed along the centerline.

The first switch may be configured to connect the centerline of the first H-bridge circuit and the centerline of the second H-bridge circuit.

The first switching bridge may include four bridge switches respectively disposed at in bridges of the first H-bridge circuit, and the second switching bridge may include four bridge switches respectively disposed at bridges of the second H-bridge circuit.

The resonant converter may be configured such that, when the first switch is closed, two bridge switches disposed on the side of the first switch among the four bridge switches of the first switching bridge and two bridge switches disposed on the side of the first switch among the four bridge switches of the second switching bridge are open.

The first resonant tank and the first primary winding may be electrically connected in series, and the second resonant tank and the second primary winding may be electrically connected in series.

A resonant converter for an electric vehicle charger according to another embodiment may include a first input circuit including a first switching bridge, a first resonant tank, and a first primary winding, a second input circuit connected in parallel with the first input circuit and including a second switching bridge, a second resonant tank, and a second primary winding, a switch configured to electrically connect the first primary winding and the second primary winding in series, a first output circuit including a first secondary winding constituting a first transformer along with the first primary winding, and a first rectifier network, a second output circuit connected in parallel with the first output circuit, and including a second secondary winding constituting a second transformer along with the second primary winding, and a second rectifier network, and an output capacitor connected in parallel with the first output circuit and the second output circuit.

When the switch is open, a fifth voltage may be applied to the output capacitor based on an output voltage of the first output circuit and an output voltage of the second output circuit, and when the switch is closed, a sixth voltage may be applied to the output capacitor based on the output voltage of the first output circuit and the output voltage of the second output circuit, wherein the magnitude of the sixth voltage may be less than the magnitude of the fifth voltage.

The first input circuit may be a first H-bridge circuit in which the first resonant tank and the first primary winding are disposed along the centerline, and the second input circuit may be a second H-bridge circuit in which the second resonant tank and the second primary winding are disposed along the centerline.

The switch may be configured to connect the centerline of the first H-bridge circuit and the centerline of the second H-bridge circuit.

The first switching bridge may include four bridge switches respectively disposed at bridges of the first H-bridge circuit, and the second switching bridge may include four bridge switches respectively disposed at bridges of the second H-bridge circuit.

When the switch is closed, two bridge switches disposed on the side of switch among the four bridge switches of the first switching bridge and two bridge switches disposed on the side of the switch among the four bridge switches of the second switching bridge may be open.

An electric vehicle charger according to another embodiment may include an AC-DC converter configured to convert AC power received from an external power source into DC power, an electric reservoir configured to store the DC power received from the AC-DC converter, a DC-DC converter configured to convert the DC power received from the AC-DC converter or the electric reservoir into DC power having a different voltage, and a controller configured to control the AC-DC converter, the electric reservoir, and the DC-DC converter, wherein the DC-DC converter may include a first input circuit including a first switching bridge, a first resonant tank, and a first primary winding, a second input circuit connected in parallel with the first input circuit and including a second switching bridge, a second resonant tank, and a second primary winding, a first switch configured to electrically connect the first primary winding and the second primary winding in series, a first output circuit including a first secondary winding constituting a first transformer along with the first primary winding, and a first rectifier network, a second output circuit connected in parallel with the first output circuit and including a second secondary winding constituting a second transformer along with the second primary winding, and a second rectifier network, a second switch configured to connect the first secondary winding and the second secondary winding, and an output capacitor connected in parallel with the first output circuit and the second output circuit.

When the first switch is open and the second switch is open, a first voltage may be applied to the output capacitor based on an output voltage of the first output circuit and an output voltage of the second output circuit, and when the first switch is closed and the second switch is open, a second voltage may be applied to the output capacitor based on the output voltage of the first output circuit and the output voltage of the second output circuit, wherein the magnitude of the second voltage may be less than the magnitude of the first voltage.

When the first switch is open and the second switch is closed, a third voltage may be applied to the output capacitor based on a voltage of the first secondary winding and a voltage of the second secondary winding, wherein the magnitude of the third voltage may be greater than the magnitude of the first voltage.

When the first switch is closed and the second switch is closed, a fourth voltage may be applied to the output capacitor based on the voltage of the first secondary winding and the voltage of the second secondary winding, wherein the magnitude of the fourth voltage may be greater than the magnitude of the second voltage and less than the magnitude of the third voltage.

### [Mode for Invention]

The terms used in the embodiments are generally and widely used, taking into account the functions of the present disclosure. However, these terms may vary depending on the intentions of those skilled in the art, precedents, the emergence of new technologies, etc. Furthermore, in certain cases, terms may be arbitrarily selected by the applicant, in which case their meanings will be described in detail in the relevant description of the disclosure. Therefore, the terms used in the present disclosure should be defined not simply based on their names, but based on their meaning and the overall context of the present disclosure.

When a part throughout the specification is said to "include" a component, unless otherwise specifically stated, this does not exclude other components but rather implies the inclusion of other components. Furthermore, terms such as "~ unit" and "~ module" described in the specification refer to a unit that processes at least one function or operation, which may be implemented in hardware, software, or a combination of hardware and software.

As used herein, when expressions such as "at least one" precede an array of components, they modify the entire array of components, not each individual component. For example, the expression "at least one of a, b, and c" should be interpreted to include a, b, c, a and b, a and c, b and c, or a and b and c.

Embodiments of the present disclosure will be described in detail below such that those skilled in the art can easily implement the same with reference to the attached drawings. The present disclosure may be implemented in a form that can be implemented in the various embodiments of the aerosol generating devices described above, or may be implemented in various different forms and is not limited to the embodiments described herein.

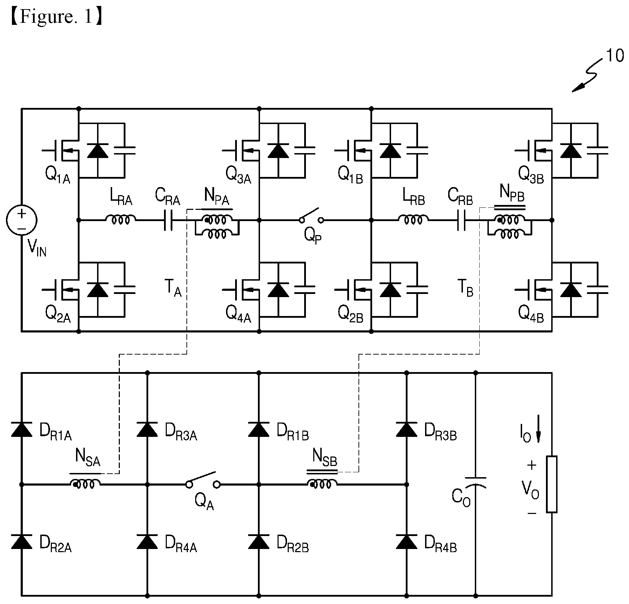

FIG. 1 is a circuit diagram illustrating a resonant converter according to an embodiment. FIG. 1 illustrates a resonant converter when a first switch Q_{P} and a second switch Q_{A} are open.

FIG. 1 illustrates a resonant converter 10 for an electric vehicle charger. The resonant converter 10 may refer to a device that converts power using a resonant circuit. The resonant converter 10 may be a DC-DC converter that converts input DC power into DC power having a different voltage and outputs the same. The resonant converter 10 may be employed in an electric vehicle charger, and more specifically, may be disposed within a power module for an electric vehicle charger. In addition to the resonant converter 10, the power module may further include a controller for controlling the resonant converter 10, a cooler for cooling the resonant converter 10, a socket including terminals for electrically connecting the resonant converter 10 to an external device, and at least one other type of converter.

The resonant converter 10 may include a first input circuit including a first switching bridge, a first resonant tank, and a first primary winding N_{PA}. In an embodiment, the first switching bridge may include a plurality of bridge switches Q_{1A}, Q_{2A}, Q_{3A}, and Q_{4A} controlled by at least one switching signal. The first switching bridge may generate a square wave output from a DC input voltage V_{IN}. The square wave output may be transmitted to the first resonant tank and the first primary winding N_{PA}.

The first resonant tank is coupled to the first switching bridge and may include a resonant inductor L_{RA} and a resonant capacitor C_{RA} connected in series. However, the present disclosure is not limited thereto, and the first resonant tank may also include a combination of at least one resonant inductor and at least one resonant capacitor connected in series or in parallel.

The resonant converter 10 may include a second input circuit connected in parallel with the first input circuit and including a second switching bridge, a second resonant tank, and a second primary winding N_{PB}. In an embodiment, the second switching bridge may include a plurality of bridge switches Q_{1B}, Q_{2B}, Q_{3B}, and Q_{4B} controlled by at least one switching signal. The second switching bridge may generate a square wave output from the DC input voltage V_{IN}. The square wave output may be transmitted to the second resonant tank and the second primary winding N_{PB}.

The second resonant tank may be coupled to the second switching bridge and include a resonant inductor L_{RB} and a resonant capacitor C_{RB} connected in series. However, the present disclosure is not necessarily limited, and the second resonant tank may also include a combination of at least one resonant inductor and at least one resonant capacitor connected in series or in parallel.

Although FIG. 1 illustrates each of the first switching bridge and the second switching bridge as a full bridge including four bridge switches, the present disclosure is not necessarily limited thereto. At least one of the first switching bridge and the second switching bridge may be a half bridge including two bridge switches. Furthermore, at least one of the first switching bridge and the second switching bridge may have a full bridge configuration, but may operate in the same manner as a half bridge through control using a switching signal.

The resonant converter 10 may include a first output circuit including a first secondary winding N_{SA} constituting a first transformer T_{A} along with the first primary winding N_{PA}, and a first rectifier network. The first transformer T_{A} may change the strength of an AC voltage in proportion to a turns ratio between the first primary winding N_{PA} and the first secondary winding N_{SA}. The first input circuit and the first output circuit may constitute a first power conversion circuit. Since the first resonant tank includes the resonant inductor L_{RA} and the resonant capacitor C_{RA}, and the first transformer T_{A} has a magnetizing inductance, the first power conversion circuit may correspond to an LLC converter. The first rectifier network may include a plurality of bridge diodes D_{R1A}, D_{R2A}, D_{R3A}, and D_{R4A} for converting an AC input into a DC output.

The resonant converter 10 may include a second output circuit that is connected in parallel with the first output circuit and includes a second secondary winding N_{SB} constituting a second transformer T_{B} along with the second primary winding N_{PB}, and a second rectifier network. The second transformer T_{B} may change the strength of an AC voltage in proportion to a turns ratio between the second primary winding N_{PB} and the second secondary winding N_{SB}. The second input circuit and the second output circuit may form a second power conversion circuit. Since the second resonant tank includes the resonant inductor L_{RB} and the resonant capacitor C_{RB} and the second transformer T_{B} has a magnetizing inductance, the second power conversion circuit may correspond to an LLC converter. The second rectifier network may include a plurality of bridge diodes D_{R1B}, D_{R2B}, D_{R3B}, and D_{R4B} for converting an AC input into a DC output.

The resonant converter 10 may include the first switch Q_{P} that electrically connects the first primary winding N_{PA} and the second primary winding N_{PB} in series. Furthermore, the resonant converter 10 may include the second switch Q_{A} that electrically connects the first secondary winding N_{SA} and the second secondary winding N_{SB} in series. Furthermore, the resonant converter 10 may further include a control circuit for determining whether the first switch Q_{P} and the second switch Q_{A} are open or closed.

Each of the first switch Q_{P} and the second switch Q_{A} may include at least one of a metal-oxide-semiconductor field-effect transistor (MOSFET), a bipolar junction transistor (BJT), a gate turn-off thyristor (GTO), an integrated gate commutated thyristor (IGCT), an isolated gate bipolar transistor (IGBT), and a relay. However, the present disclosure is not limited thereto, and the first switch Q_{P} and the second switch Q_{A} may be other types of switches including a bidirectional switch.

The resonant converter 10 may include an output capacitor Co shared by the first output circuit and the second output circuit. The range of output voltage applied to the output capacitor C_{O} may vary depending on whether the first switch Q_{P} and the second switch Q_{A} are open or closed.

As illustrated in FIG. 1, when the first switch Q_{P} and the second switch Q_{A} are open, the first input circuit and the second input circuit may operate in parallel, the first output circuit and the second output circuit may operate in parallel, and the first power conversion circuit and the second power conversion circuit may operate in parallel. Accordingly, a first voltage may be applied to the output capacitor C_{O} based on the output voltage of the first output circuit and the output voltage of the second output circuit.

In an embodiment, the first power conversion circuit and the second power conversion circuit may operate in an interleaved manner to reduce current ripples. However, the present disclosure is not necessarily limited thereto. The first power conversion circuit and the second power conversion circuit may operate in synchronization at the same timing using identical switching signals.

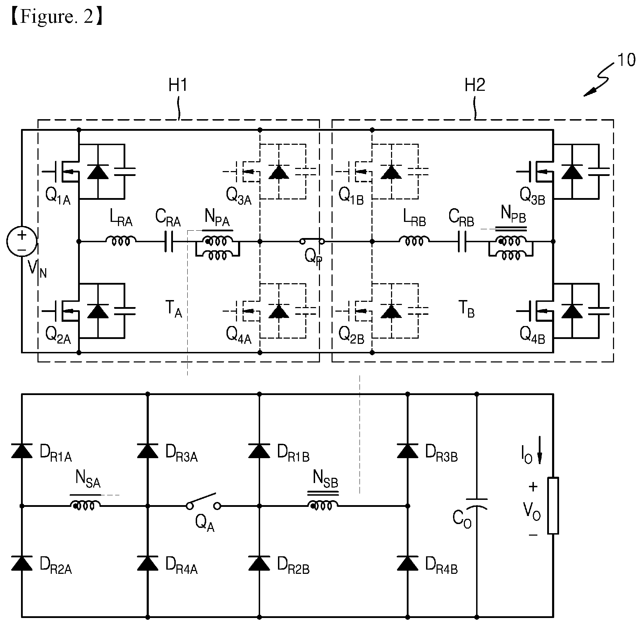

FIG. 2 is a circuit diagram illustrating the resonant converter according to an embodiment. FIG. 2 illustrates the resonant converter when the first switch Q_{P} is closed and the second switch Q_{A} is open.

Referring to FIG. 2, the first input circuit may include a first H-bridge circuit H1 in which the first resonant tank and the first primary winding N_{PA} are disposed along the centerline. Furthermore, the second input circuit may include a second H-bridge circuit H2 in which the second resonant tank and the second primary winding N_{PB} are disposed along the centerline.

The bridge switches Q_{1A}, Q_{2A}, Q_{3A}, and Q_{4A} of the first switching bridge may be respectively disposed at four bridges of the first H-bridge circuit H1. Additionally, the bridge switches Q_{1B}, Q_{2B}, Q_{3B}, and Q_{4B} of the second switching bridge may be respectively disposed at four bridges of the second H-bridge circuit H2. The first switch Q_{P} may be disposed to connect the center lines of the first H-bridge circuit H1 and the second H-bridge circuit H2.

The resonant converter 10 may further include a switching controller configured to control the first and second switching bridges depending on the open/closed state of the first switch Q_{P}.

When the first switch Q_{P} is open, the switching controller may control the bridge switches Q_{3A}, Q_{4A}, Q_{1B}, and Q_{2B} positioned close to the first switch Q_{P} to remain in the open state. Furthermore, the switching controller may control the bridge switches Q_{1A}, Q_{2A}, Q_{3B}, and Q_{4B} positioned far from the first switch Q_{P} to generate a square wave output from the DC input voltage V_{IN}. The square wave output generated by the bridge switches Q_{1A}, Q_{2A}, Q_{3B}, and Q_{4B} may be transmitted to the first resonant tank, the first primary winding N_{PA}, the second resonant tank, and the second primary winding N_{PB}.

When the first switch Q_{P} is closed, the switching controller may control the bridge switches Q_{1A}, Q_{2A}, Q_{3A}, and Q_{4A} of the first switching bridge to generate a square wave output from the DC input voltage V_{IN}. The square wave output generated by the bridge switches Q_{1A}, Q_{2A}, Q_{3A}, and Q_{4A} may be transmitted to the first resonant tank and the first primary winding N_{PA}. In addition, the switching controller may control the bridge switches Q_{1B}, Q_{2B}, Q_{3B}, and Q_{4B} of the second switching bridge to generate a separate square wave output from the DC input voltage V_{IN}. The square wave output generated by the bridge switches Q_{1B}, Q_{2B}, Q_{3B}, and Q_{4B} may be transmitted to the second resonant tank and the second primary winding N_{PB}.

As illustrated in FIG. 2, when the first switch Q_{P} is closed and the second switch Q_{A} is open, a second voltage may be applied to the output capacitor Co based on the output voltage of the first output circuit and the output voltage of the second output circuit. In addition, the bridge switches Q_{3A}, Q_{4A}, Q_{1B}, and Q_{2B} disposed on the side of the first switch Q_{P} may be controlled not to operate. That is, the bridge switches Q_{3A}, Q_{4A}, Q_{1B}, and Q_{2B} disposed on the side of the first switch Q_{P} can remain in the open state. Since the first primary winding N_{PA} and the second primary winding N_{PB} are electrically connected in series by the first switch Q_{P}, the magnitudes of the voltages applied to the first primary winding N_{PA} and the second primary winding N_{PB} can be reduced. Accordingly, the magnitudes of the voltages of the first secondary winding N_{SA} and the second secondary winding N_{SB}, which are induced by the voltages of the first primary winding N_{PA} and the second primary winding N_{PB}, can also be reduced. Therefore, the second voltage applied to the output capacitor C_{O} when the first switch Q_{P} is closed and the second switch Q_{A} is open can be less than the first voltage applied to the output capacitor C_{O} when the first switch Q_{P} and the second switch Q_{A} are open.

For example, the second voltage applied to the output capacitor Co when the first switch Q_{P} is closed and the second switch Q_{A} is open can have a magnitude that is approximately half the first voltage applied to the output capacitor Co when the first switch Q_{P} and the second switch Q_{A} are open.

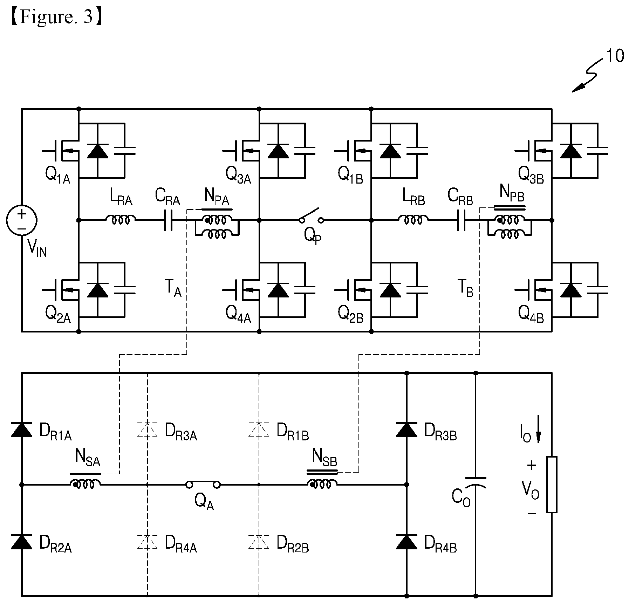

FIG. 3 is a circuit diagram illustrating the resonant converter according to an embodiment. FIG. 3 illustrates the resonant converter when the first switch Q_{P} is open and the second switch Q_{A} is closed.

As illustrated in FIG. 3, when the first switch Q_{P} is open and the second switch Q_{A} is closed, a third voltage may be applied to the output capacitor Co based on the voltage induced in the first secondary winding N_{SA} and the voltage induced in the second secondary winding N_{SB}. The first secondary winding N_{SA} and the second secondary winding N_{SB} may be electrically connected in series by the second switch Q_{A}, and the bridge diodes D_{R3A}, D_{R4A}, D_{R1B}, and D_{R2B} disposed on the side of the second switch Q_{A} may be electrically short-circuited. Accordingly, the third voltage may be applied to the output capacitor Co based on the sum of the voltage induced in the first secondary winding N_{SA} and the voltage induced in the second secondary winding N_{SB}. Therefore, the third voltage applied to the output capacitor Co when the first switch Q_{P} is open and the second switch Q_{A} is closed may be greater in magnitude than the first voltage applied to the output capacitor Co when the first switch Q_{P} and the second switch Q_{A} are open.

For example, the third voltage applied to the output capacitor Co when the first switch Q_{P} is open and the second switch Q_{A} is closed may have a magnitude approximately twice that of the first voltage applied to the output capacitor Co when the first switch Q_{P} and the second switch Q_{A} are open.

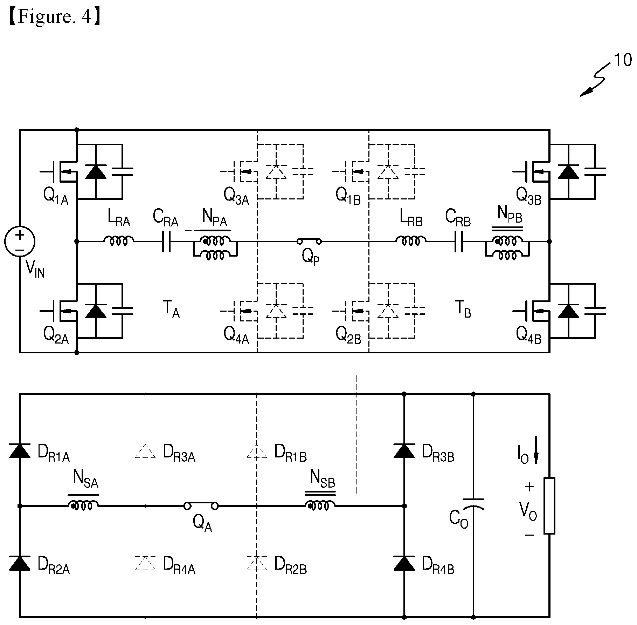

FIG. 4 is a circuit diagram illustrating the resonant converter according to an embodiment. FIG. 4 illustrates the resonant converter when the first switch Q_{P} and the second switch Q_{A} are closed.

As illustrated in FIG_{.} 4, when the first switch Q_{P} and the second switch Q_{A} are closed, a fourth voltage may be applied to the output capacitor Co based on the voltage induced in the first secondary winding N_{SA} and the voltage induced in the second secondary winding N_{SB}. Furthermore, the bridge switches Q_{3A}, Q_{4A}, Q_{1B}, and Q_{2B} located on the side of the first switch Q_{P} may be controlled not to operate. That is, the bridge switches Q_{3A}, Q_{4A}, Q_{1B}, and Q_{2B} located on the side of the first switch Q_{P} may remain in an open state. Furthermore, the bridge diodes D_{R3A}, D_{R4A}, D_{R1B}, and D_{R2B} located on the side of the second switch Q_{A} may be electrically short-circuited.

Since the first primary winding N_{PA} and the second primary winding N_{PB} are electrically connected in series by the first switch Q_{P}, the magnitude of the voltage applied to the first primary winding N_{PA} and the magnitude of the voltage applied to the second primary winding N_{PB} can be reduced. When the magnitudes of the voltages applied to the first primary winding N_{PA} and the second primary winding N_{PB} are reduced, the magnitudes of the voltages induced in the first secondary winding N_{SA} and the second secondary winding N_{SB} can also be reduced. Therefore, the fourth voltage applied to the output capacitor Co when the first switch Q_{P} and the second switch Q_{A} are closed can be less in magnitude than the third voltage applied to the output capacitor Co when the first switch Q_{P} is open and the second switch Q_{A} is closed.

As the first secondary winding N_{SA} and the second secondary winding N_{SB} are electrically connected in series by the second switch Q_{A}, the fourth voltage can be applied to the output capacitor C_{O} based on the sum of the voltage induced in the first secondary winding N_{SA} and the voltage induced in the second secondary winding N_{SB}. Therefore, the fourth voltage applied to the output capacitor C_{O} when the first switch Q_{P} and the second switch Q_{A} are closed can be greater in magnitude than the second voltage applied to the output capacitor C_{O} when the first switch Q_{P} is closed and the second switch Q_{A} is open.

The degree to which the magnitude of the voltage induced in the first secondary winding N_{SA} and the magnitude of the voltage induced in the second secondary winding N_{SB} decrease as the first switch Q_{P} is closed may be similar to the degree to which the magnitude of the voltage applied to the output capacitor C_{O} based on the sum of the voltage induced in the first secondary winding N_{SA} and the voltage induced in the second secondary winding N_{SB} as the second switch Q_{A} is closed increase. Accordingly, the fourth voltage applied to the output capacitor Co when the first switch Q_{P} and the second switch Q_{A} are closed may have a magnitude similar to the first voltage applied to the output capacitor Co when the first switch Q_{P} and the second switch Q_{A} are open. However, the voltage or current stress applied to each of the first transformer T_{A} and the second transformer T_{B} when the first switch Q_{P} and the second switch Q_{A} are closed can be reduced by half compared to that when the first switch Q_{P} and the second switch Q_{A} are open.

According to the embodiments illustrated in FIG. 1 to FIG. 4, the resonant converter 10 can provide output voltages having various magnitudes depending on the open/closed states of the first switch Q_{P} and the second switch Q_{A.}

In the embodiments illustrated in FIG. 1 to FIG. 4, the first switch Q_{P} and the second switch Q_{A} may each be a single switching element. Accordingly, the circuit configuration for providing output voltages having various magnitudes within the power conversion system can be simplified. Furthermore, reliability can be increased compared to a case where the first switch Q_{P} and the second switch Q_{A} are each composed of multiple switches.

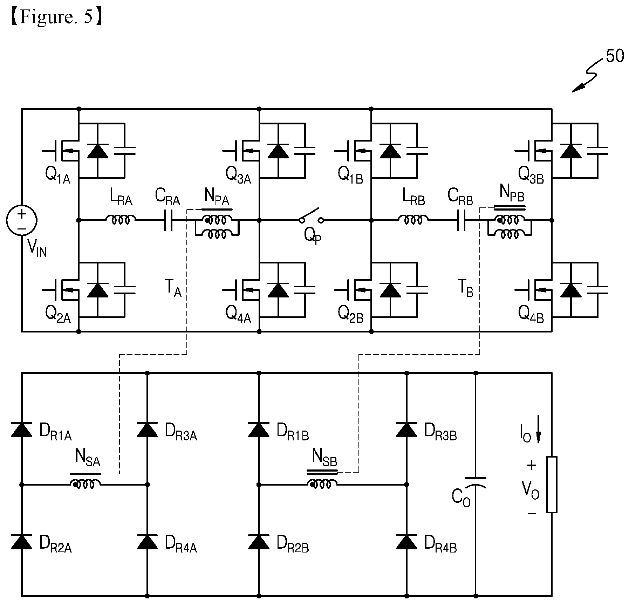

FIG. 5 is a circuit diagram illustrating a resonant converter according to another embodiment. FIG. 5 illustrates the resonant converter when the switch Q_{P} is open.

The resonant converter 50 may include a first input circuit including a first switching bridge, a first resonant tank, and a first primary winding N_{PA}. In an embodiment, the first switching bridge may include a plurality of bridge switches Q_{1A}, Q_{2A}, Q_{3A}, and Q_{4A} controlled by at least one switching signal. The first switching bridge may generate a square wave output from a DC input voltage V_{IN}. The square wave output may be transmitted to the first resonant tank and the first primary winding N_{PA}.

The first resonant tank may be coupled to the first switching bridge and include a resonant inductor L_{RA} and a resonant capacitor C_{RA} connected in series. However, the present disclosure is not limited thereto, and the first resonant tank may include a combination of at least one resonant inductor and at least one resonant capacitor connected in series or in parallel.

The resonant converter 50 may include a second input circuit connected in parallel with the first input circuit and including a second switching bridge, a second resonant tank, and a second primary winding N_{PB}. In an embodiment, the second switching bridge may include a plurality of bridge switches Q_{1B}, Q_{2B}, Q_{3B}, and Q_{4B} controlled by at least one switching signal. The second switching bridge may generate a square wave output from the DC input voltage V_{IN}. The square wave output may be transmitted to the second resonant tank and the second primary winding N_{PB}.

The second resonant tank may be coupled to the second switching bridge and include a resonant inductor L_{RB} and a resonant capacitor C_{RB} connected in series. However, the second resonant tank may also include a combination of at least one resonant inductor and at least one resonant capacitor connected in series or parallel.

Although FIG. 5 illustrates each of the first switching bridge and the second switching bridge as a full bridge including four bridge switches, but the present disclosure is not necessarily limited thereto. At least one of the first switching bridge and the second switching bridge may be a half bridge including two bridge switches. Furthermore, at least one of the first switching bridge and the second switching bridge may have a full bridge configuration, but may operate in the same manner as a half bridge through control using a switching signal.

The resonant converter 50 may include a first output circuit including a first secondary winding N_{SA} that forms a first transformer T_{A} along with the first primary winding N_{PA}, and a first rectifier network. The first transformer T_{A} can change the strength of an AC voltage in proportion to a turns ratio between the first primary winding N_{PA} and the first secondary winding N_{SA}. The first input circuit and the first output circuit may constitute a first power conversion circuit. The first resonant tank includes a resonant inductor L_{RA} and a resonant capacitor C_{RA}, and the first transformer T_{A} has a magnetizing inductance, and thus the first power conversion circuit may correspond to an LLC converter. The first rectifier network may include a plurality of bridge diodes D_{R1A}, D_{R2A}, D_{R3A}, and D_{R4A} for converting an AC input into a DC output.

The resonant converter 50 may include a second output circuit that is connected in parallel with the first output circuit and includes a second secondary winding N_{SB} that forms a second transformer T_{B} along with the second primary winding N_{PB}, and a second rectifier network. The second transformer T_{B} may change the strength of an AC voltage in proportion to a turns ratio between the second primary winding N_{PB} and the second secondary winding N_{SB}. The second input circuit and the second output circuit may constitute a second power conversion circuit. The second resonant tank may include a resonant inductor L_{RB} and a resonant capacitor C_{RB}, and the second transformer T_{B} has a magnetizing inductance, and thus the second power conversion circuit may correspond to an LLC converter. The second rectifier network may include a plurality of bridge diodes D_{R1B}, D_{R2B}, D_{R3B}, and D_{R4B} for converting an AC input into a DC output.

The resonant converter 50 may include a switch Q_{P} that electrically connects the first primary winding N_{PA} and the second primary winding N_{PA} in series. Furthermore, the resonant converter 50 may further include a control circuit for determining whether the switch Q_{P} is open or closed.

The switch Q_{P} may include at least one of a metal oxide semiconductor field-effect transistor, a bipolar junction transistor, a gate turn-off thyristor, an integrated gate commutator thyristor, an insulated gate bipolar transistor, and a relay. However, the present disclosure is not limited thereto, and the switch Q_{P} may be another type of switch, including a bidirectional switch.

The resonant converter 50 may include an output capacitor Co shared by the first output circuit and the second output circuit. The range of the output voltage applied to the output capacitor Co may vary depending on whether the switch Q_{P} is open or closed.

As illustrated in FIG. 5, when the switch Q_{P} is open, the first input circuit and the second input circuit can operate in parallel, the first output circuit and the second output circuit can operate in parallel, and the first power conversion circuit and the second power conversion circuit can operate in parallel. Accordingly, a fifth voltage can be applied to the output capacitor Co based on the output voltage of the first output circuit and the output voltage of the second output circuit.

In an embodiment, the first power conversion circuit and the second power conversion circuit may operate in an interleaved manner to reduce current ripples. However, the present disclosure is not necessarily limited thereof. The first power conversion circuit and the second power conversion circuit may also operate in synchronization at the same timing according to identical switching signals.

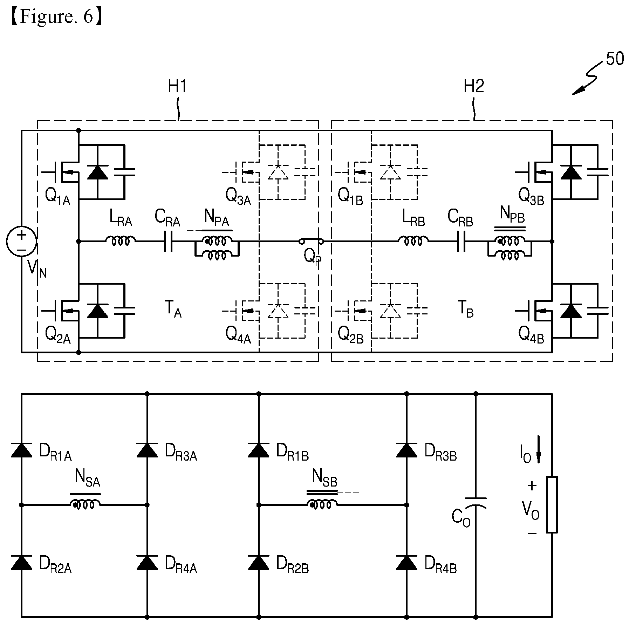

FIG. 6 is a circuit diagram illustrating a resonant converter according to another embodiment. FIG. 6 illustrates the resonant converter when the switch Q_{P} is closed.

Referring to FIG. 6, a first input circuit may include a first H-bridge circuit H1 in which a first resonant tank and a first primary winding N_{PA} are disposed along the centerline. A second input circuit may include a second H-bridge circuit H2 in which a second resonant tank and a second primary winding N_{PB} are disposed along the centerline.

The bridge switches Q_{1A}, Q_{2A}, Q_{3A}, and Q_{4A} of the first switching bridge may be respectively positioned at four bridges of the first H-bridge circuit H1. Furthermore, the bridge switches Q_{1B}, Q_{2B}, Q_{3B}, and Q_{4B} of the second switching bridge may be respectively positioned at four bridges of the second H-bridge circuit H2. The switch Q_{P} may be disposed to connect the center lines of the first H-bridge circuit H1 and the second H-bridge circuit H2.

The resonant converter 50 may further include a switching controller configured to control the first and second switching bridges depending on the open/closed state of the switch Q_{P}.

When the switch Q_{P} is open, the switching controller may control the bridge switches Q_{3A}, Q_{4A}, Q_{1B}, and Q_{2B} disposed close to the switch Q_{P} to remain in an open state. Additionally, the switching controller may control the bridge switches Q_{1A}, Q_{2A}, Q_{3B}, and Q_{4B} disposed far from the switch Q_{P} to generate a square wave output from the DC input voltage V_{IN}. The square wave output generated by the bridge switches Q_{1A}, Q_{2A}, Q_{3B}, and Q_{4B} may be transmitted to the first resonant tank, the first primary winding N_{PA}, the second resonant tank, and the second primary winding N_{PB}.

When the switch Q_{P} is closed, the switching controller may control the bridge switches Q_{1A}, Q_{2A}, Q_{3A}, and Q_{4A} of the first switching bridge to generate a square wave output from the DC input voltage V_{IN}. The square wave output generated by the bridge switches Q_{1A}, Q_{2A}, Q_{3A}, and Q_{4A} may be transmitted to the first resonant tank and the first primary winding N_{PA}. In addition, the switching controller can control the bridge switches Q_{1B}, Q_{2B}, Q_{3B}, and Q_{4B} of the second switching bridge to generate a separate square wave output from the DC input voltage V_{IN}. The square wave output generated by the bridge switches Q_{1B}, Q_{2B}, Q_{3B}, and Q_{4B} may be transmitted to the second resonant tank and the second primary winding N_{PB}.

As illustrated in FIG. 6, when the switch Q_{P} is closed, a sixth voltage may be applied to the output capacitor Co based on the output voltage of the first output circuit and the output voltage of the second output circuit. In addition, the bridge switches Q_{3A}, Q_{4A}, Q_{1B}, and Q_{2B} disposed on the side of the switch Q_{P} may be controlled not to operate. That is, the bridge switches Q_{3A}, Q_{4A}, Q_{1B}, and Q_{2B} disposed on the side of the switch Q_{P} may remain in an open state. Since the first primary winding N_{PA} and the second primary winding N_{PA} are electrically connected in series by the switch Q_{P}, the magnitude of the voltage applied to the first primary winding N_{PA} and the magnitude of the voltage applied to the second primary winding N_{PA} can be reduced. When the magnitudes of the voltages applied to the first primary winding N_{PA} and the second primary winding N_{PA} are reduced, the magnitude of the voltage induced in the first secondary winding N_{SA} and the magnitude of the voltage induced in the second secondary winding N_{SB} may also be reduced. Accordingly, a sixth voltage applied to the output capacitor Co when the switch Q_{P} is closed may be less in magnitude than the fifth voltage applied to the output capacitor Co when the switch Q_{P} is open.

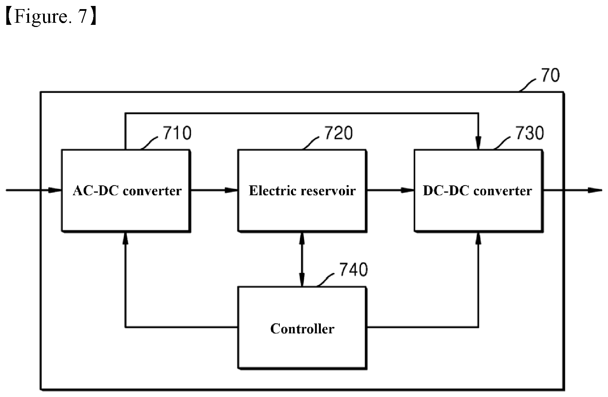

FIG. 7 is a block diagram of an electric vehicle charger according to an embodiment.

Referring to FIG. 7, the electric vehicle charger 70 may include an AC-DC converter 710, an electric reservoir 720, a DC-DC converter 730, and a controller 740. However, the internal structure of the electric vehicle charger 70 is not limited to that illustrated in FIG. 7. Those skilled in the art will appreciate that, depending on the design of the electric vehicle charger 70, some of the hardware components illustrated in FIG. 7 may be omitted or new components may be added. For example, the electric vehicle charger 70 may further include a socket including terminals for electrically connecting an external device to the electric vehicle charger 70.

The electric vehicle charger 70 may refer to a rapid charger installed at an electric charging station, which is the same concept as a gasoline gas station. In an example, the electric vehicle charger 70 may charge an electric vehicle battery to 80% or more in less than one hour, and the charging capacity of the electric vehicle charger 70 may be 30 kW or more. However, the charging capacity of the electric vehicle charger 70 is not necessarily limited thereto.

The AC-DC converter 710 may refer to a converter that converts AC power received from an external power source into DC power. For example, the AC-DC converter 710 may convert AC power received from an external three-phase AC input power source into single-phase DC power. However, the AC-DC converter 710 is not limited thereto. Instead of being directly connected to an external three-phase AC input power source, the AC-DC converter 710 may be connected to an external three-phase AC input power source through a separate three-phase transformer, thereby receiving single-phase AC power and converting the same into DC power.

The electric reservoir 720 may store DC power received from the AC-DC converter 710. The electric reservoir 720 may serve as a buffer during the process of transmitting power from the AC-DC converter 710 to the DC-DC converter 730. The electric reservoir 720 may include, but is not limited to, one or more battery packs.

The DC-DC converter 730 may refer to a converter that converts input DC power into DC power having a different voltage and outputs the same. For example, the DC-DC converter 730 may convert DC power received from the AC-DC converter 710 or the electric reservoir 720 into DC power having a different voltage. The DC-DC converter 730 may be the resonant converter 10 illustrated in FIG. 1 to FIG. 4 or the resonant converter 50 illustrated in FIG. 5 and FIG. 6.

The controller 740 is hardware that controls the overall operation of the electric vehicle charger 70. For example, the controller 740 may control the operations of the AC-DC converter 710, the electric reservoir 720, the DC-DC converter 730, and other components included in the electric vehicle charger 70.

The controller 740 includes at least one processor. The processor may be implemented as an array of multiple logic gates, or as a combination of a general-purpose microprocessor and a memory storing a program executable in the microprocessor. Furthermore, those skilled in the art will appreciate that the processor may be implemented as other types of hardware.

In an embodiment, the DC-DC converter 730 may include a first input circuit including a first switching bridge, a first resonant tank, and a first primary winding. Furthermore, the DC-DC converter 730 may include a second input circuit connected in parallel with the first input circuit and including a second switching bridge, a second resonant tank, and a second primary winding. The DC-DC converter 730 may include a first output circuit including a first secondary winding, which constitutes a first transformer along with the first primary winding, and a first rectifier network. Additionally, the DC-DC converter 730 may include a second output circuit connected in parallel with the first output circuit and including a second secondary winding, which constitutes a second transformer along with the second primary winding, and a second rectifier network.

In an embodiment, the DC-DC converter 730 may include a first switch that connects the first primary winding and the second primary winding, a second switch that connects the first secondary winding and the second secondary winding, and an output capacitor shared by the first output circuit and the second output circuit.

In an embodiment, the magnitude of the voltage applied to the output capacitor may vary depending on the open/closed states of the first and second switches.

When the first switch is closed, the first and second primary windings are electrically connected in series, thereby reducing the magnitude of the voltage applied to the first primary winding and the magnitude of the voltage applied to the second primary winding. Accordingly, a second voltage applied to the output capacitor when the first switch is closed and the second switch is open may be less than a first voltage applied to the output capacitor when the first and second switches are open. Additionally, a fourth voltage applied to the output capacitor when the first switch and the second switch are closed may be less in magnitude than a third voltage applied to the output capacitor when the first switch is open and the second switch is closed.

Since the first secondary winding and the second secondary winding are electrically connected in series when the second switch is closed, a voltage may be applied to the output capacitor based on the sum of the voltage induced in the first secondary winding and the voltage induced in the second secondary winding. Accordingly, the third voltage applied when the first switch is open and the second switch is closed may be greater in magnitude than the first voltage applied to the output capacitor when the first switch and the second switch are open. Additionally, the fourth voltage applied to the output capacitor when the first switch and the second switch are closed may be greater in magnitude than the second voltage applied to the output capacitor when the first switch is closed and the second switch is open.

In another embodiment, the DC-DC converter 730 may include a switch that connects the first primary winding and the second primary winding, and an output capacitor shared by the first output circuit and the second output circuit.

In another embodiment, the magnitude of the voltage applied to the output capacitor may vary depending on the open/closed state of the switch.

When the switch is closed, the first and second primary windings are electrically connected in series, thereby reducing the magnitude of the voltage applied to the first primary winding and the magnitude of the voltage applied to the second primary winding. Accordingly, a sixth voltage applied to the output capacitor when the switch is closed may be less than a fifth voltage applied to the output capacitor when the switch is open.

As described above, the electric vehicle charger 70 according to the present disclosure can provide a wide range of output voltages using the DC-DC converter 730. By utilizing the first switch disposed between the primary windings of the input circuits and the second switch disposed between the secondary windings of the output circuits, the circuit configuration for providing output voltages having various magnitudes can be simplified. Furthermore, since each of the first and second switches is configured as a single switch, reliability can be increased compared to when each of the first and second switches is configured as multiple switches.

The description of the above-described embodiments is merely exemplary, and those skilled in the art will understand that various modifications and equivalent embodiments are possible. Therefore, the true scope of protection of the disclosure should be defined by the appended claims, and all differences within the scope equivalent to the content described in the claims should be construed as being included within the scope of protection defined by the claims.

## Claims

1. A resonant converter for an electric vehicle charger, comprising:
a first input circuit including a first switching bridge, a first resonant tank, and a first primary winding;
a second input circuit connected in parallel with the first input circuit and including a second switching bridge, a second resonant tank, and a second primary winding;
a first switch configured to electrically connect the first primary winding and the second primary winding in series;
a first output circuit including a first secondary winding constituting a first transformer along with the first primary winding, and a first commutation network;
a second output circuit connected in parallel with the first output circuit and including a second secondary winding constituting a second transformer along with the second primary winding, and a second commutation network;
a second switch configured to electrically connect the first secondary winding and the second secondary winding in series; and
an output capacitor connected in parallel with the first output circuit and the second output circuit.

2. The resonant converter of claim 1, wherein when the first switch is open and the second switch is open, a first voltage is applied to the output capacitor based on an output voltage of the first output circuit and an output voltage of the second output circuit, and when the first switch is closed and the second switch is open, a second voltage is applied to the output capacitor based on the output voltage of the first output circuit and the output voltage of the second output circuit,
wherein the magnitude of the second voltage is less than the magnitude of the first voltage.

3. The resonant converter of claim 2, wherein, when the first switch is open and the second switch is closed, a third voltage is applied to the output capacitor based on a voltage of the first secondary winding and a voltage of the second secondary winding,
wherein the magnitude of the third voltage is greater than the magnitude of the first voltage.

4. The resonant converter of claim 3, wherein, when the first switch is closed and the second switch is closed, a fourth voltage is applied to the output capacitor based on the voltage of the first secondary winding and the voltage of the second secondary winding,
wherein the magnitude of the fourth voltage is greater than the magnitude of the second voltage and less than the magnitude of the third voltage.

5. The resonant converter of claim 1, wherein the first input circuit is a first H-bridge circuit in which the first resonant tank and the first primary winding are disposed along the centerline, and the second input circuit is a second H-bridge circuit in which the second resonant tank and the second primary winding are disposed along the centerline.

6. The resonant converter of claim 5, wherein the first switch is configured to connect the centerline of the first H-bridge circuit and the centerline of the second H-bridge circuit.

7. The resonant converter of claim 6, wherein the first switching bridge includes four bridge switches respectively disposed at in bridges of the first H-bridge circuit, and the second switching bridge includes four bridge switches respectively disposed at bridges of the second H-bridge circuit.

8. The resonant converter of claim 7, wherein, when the first switch is closed, two bridge switches disposed on the side of the first switch among the four bridge switches of the first switching bridge and two bridge switches disposed on the side of the first switch among the four bridge switches of the second switching bridge are open.

9. The resonant converter of claim 1, wherein the first resonant tank and the first primary winding are electrically connected in series, and the second resonant tank and the second primary winding are electrically connected in series.

10. A resonant converter for an electric vehicle charger, comprising:
a first input circuit including a first switching bridge, a first resonant tank, and a first primary winding;
a second input circuit connected in parallel with the first input circuit and including a second switching bridge, a second resonant tank, and a second primary winding;
a switch configured to electrically connect the first primary winding and the second primary winding in series;
a first output circuit including a first secondary winding constituting a first transformer along with the first primary winding, and a first rectifier network;
a second output circuit connected in parallel with the first output circuit, and including a second secondary winding constituting a second transformer along with the second primary winding, and a second rectifier network; and
an output capacitor connected in parallel with the first output circuit and the second output circuit.

11. The resonant converter of claim 10, wherein, when the switch is open, a fifth voltage is applied to the output capacitor based on an output voltage of the first output circuit and an output voltage of the second output circuit, and when the switch is closed, a sixth voltage is applied to the output capacitor based on the output voltage of the first output circuit and the output voltage of the second output circuit,
wherein the magnitude of the sixth voltage is less than the magnitude of the fifth voltage.

12. The resonant converter of claim 10, wherein the first input circuit is a first H-bridge circuit in which the first resonant tank and the first primary winding are disposed along the centerline, and the second input circuit is a second H-bridge circuit in which the second resonant tank and the second primary winding are disposed along the centerline.

13. The resonant converter of claim 12, wherein the switch is configured to connect the centerline of the first H-bridge circuit and the centerline of the second H-bridge circuit.

14. The resonant converter of claim 13, wherein the first switching bridge includes four bridge switches respectively disposed at bridges of the first H-bridge circuit, and the second switching bridge includes four bridge switches respectively disposed at bridges of the second H-bridge circuit.

15. The resonant converter of claim 14, wherein, when the switch is closed, two bridge switches disposed on the side of switch among the four bridge switches of the first switching bridge and two bridge switches disposed on the side of the switch among the four bridge switches of the second switching bridge are open.

16. An electric vehicle charger, comprising:
an AC-DC converter configured to convert AC power received from an external power source into DC power;
an electric reservoir configured to store the DC power received from the AC-DC converter;
a DC-DC converter configured to convert the DC power received from the AC-DC converter or the electric reservoir into DC power having a different voltage; and
a controller configured to control the AC-DC converter, the electric reservoir, and the DC-DC converter,
wherein the DC-DC converter comprises:
a first input circuit including a first switching bridge, a first resonant tank, and a first primary winding;
a second input circuit connected in parallel with the first input circuit and including a second switching bridge, a second resonant tank, and a second primary winding;
a first switch configured to electrically connect the first primary winding and the second primary winding in series;
a first output circuit including a first secondary winding constituting a first transformer along with the first primary winding, and a first rectifier network;
a second output circuit connected in parallel with the first output circuit and including a second secondary winding constituting a second transformer along with the second primary winding, and a second rectifier network;
a second switch configured to connect the first secondary winding and the second secondary winding; and
an output capacitor connected in parallel with the first output circuit and the second output circuit.

17. The electric vehicle charger of claim 16, wherein, when the first switch is open and the second switch is open, a first voltage is applied to the output capacitor based on an output voltage of the first output circuit and an output voltage of the second output circuit, and when the first switch is closed and the second switch is open, a second voltage is applied to the output capacitor based on the output voltage of the first output circuit and the output voltage of the second output circuit,
wherein the magnitude of the second voltage is less than the magnitude of the first voltage.

18. The electric vehicle charger of claim 17, wherein, when the first switch is open and the second switch is closed, a third voltage is applied to the output capacitor based on a voltage of the first secondary winding and a voltage of the second secondary winding,
wherein the magnitude of the third voltage is greater than the magnitude of the first voltage.

19. The electric vehicle charger of claim 18, wherein, when the first switch is closed and the second switch is closed, a fourth voltage is applied to the output capacitor based on the voltage of the first secondary winding and the voltage of the second secondary winding,
wherein the magnitude of the fourth voltage is greater than the magnitude of the second voltage and less than the magnitude of the third voltage.
